# EUROPÄISCHE PATENTSCHRIFT

(11) **EP 1 000 913 B1**
(45) Veröffentlichungstag und Bekanntmachung des Hinweises auf die Patenterteilung: **04.12.2002**
(21) Anmeldenummer: 98811132.4
(22) Anmeldetag: 13.11.1998
(51) Int. Cl.: C04B 35/50, H01M 8/12

(54) **Verfahren zur Herstellung von dotierter Ceroxidkeramik**
Method of producing doped ceria ceramics
Procédé de fabrication de matériau céramique à base de l'oxyde de cérium dopé

(43) Veröffentlichungstag der Anmeldung: 17.05.2000
(73) Patentinhaber: Eidgenössische Technische Hochschule Zürich, 8092 Zürich (CH)
(72) Erfinder: Kleinlogel, Christoph Dipl.-Phys., 8049 Zürich (CH); Goedickemeier, Martin, 9056 Gais (CH); Gauckler, Ludwig Prof. Dr., 8200 Schaffhausen (CH)
(74) Vertreter: Patentanwälte Breiter + Wiedmer AG

(56) Entgegenhaltungen:
- WO-A-91/09430
- INABA H ET AL: "Sintering behaviors of ceria and gadolinia-doped ceria" SOLID STATE IONICS, Bd. 106, Nr. 3-4, 1. Februar 1998, Seite 263-268 XP004111881
- VAN HERLE J ET AL: "Sintering Behaviour and Ionic Conductivity of Yttria-Doped Ceria" JOURNAL OF THE EUROPEAN CERAMIC SOCIETY, Bd. 16, Nr. 9, 1996, Seite 961-973 XP004047398
- OVERS A ET AL: "Properties of the solid electrolyte gadolinia-doped ceria prepared by thermal decomposition of mixed cerium-gadolinium oxalate" JOURNAL OF THE AMERICAN CERAMIC SOCIETY, DEC. 1982, USA, Bd. 65, Nr. 12, Seiten 606-609, XP002098819 ISSN 0002-7820
- RAHAMAN M N ET AL: "EFFECT OF SOLID SOLUTION ADDITIVES ON THE SINTERING OF ULTRA-FINE CEO2 POWERS" JOURNAL OF THE EUROPEAN CERAMIC SOCIETY, Bd. 15, Nr. 10, 1. Januar 1995, Seiten 939-950, XP000526624

## Beschreibung

Die Erfindung bezieht sich auf ein Verfahren nach dem Oberbegriff von Patentanspruch 1.

Es ist bekannt, auf Ceroxid (Ce₂O) basierende Keramiken mittels unterschiedlicher Verfahren herzustellen. Solche Verfahren sind beispielsweise das Foliengiessen oder Pressen mit anschliessendem Sintern bei Temperaturen von 1300 - 1650°C. Derart hohe Sintertemperaturen sind notwendig, um ein dichtes Gefüge ohne offene Porosität sowie eine hohe Festigkeit zu erhalten. Allerdings führen diese hohen Temperaturen zu einer Korngrösse im Gefüge, welche in der Grössenordnung von mehreren Mikrometern (µm) liegt. Mit zunehmender Korngrösse werden die mechanischen Eigenschaften der Keramiken schlechter. Die Herstellung und Verwendung von auf CeO₂ basierenden Keramiken ist aus mehreren Literaturstellen bekannt, beispielsweise aus Solid State lonics, Vol. 36, 71-75 (1989).

Die WO,A 91/09430 beschreibt eine Festelektrolytzusammensetzung auf der Basis von Ceroxid, eine Brennstoffzelle und ein Verfahren zur Erzeugung von Elektrizität mit dieser Zelle. Die Ceroxidkeramik enthält ein erstes Dotierelement M ausgewählt aus der Gruppe, bestehend aus Pr, Nd, Pm, Sm, Eu, Gd, Tb, Dy, Ho, Er, Tm, Yb, Lu, Sc, Y, La und Ca, und ein zweites Dotierelement D aus der Gruppe, bestehend aus Pr, Sm, Eu, Tb, Fe, Co und Ni, wobei M ≠ D.

Das erste Dotierelement M der WO,A 91/09430 dient der Erhöhung der lonenleitfähigkeit, das zweite Dotierelement D der Erniedrigung der Elektronenleitfähigkeit der Zusammensetzung unter reduzierenden Bedingungen. Die Herstellung des Festelektrolyten erfolgt in üblicher Weise mittels Pressen und Sintern bei Temperaturen im Bereich von 1300 - 1525°C. Über die Mikrostruktur bzw. Korngrösse werden keine Aussagen gemacht, aufgrund der angegebenen Parameter muss diese jedoch im Bereich von mehreren Mikrometern liegen.

Weiter ist aus der EP,A1 0722194 die Zusammensetzung eines Festkörperelektrolyten mit fehlerhafter Fluoritstruktur für Brennstoffzellen auf der Basis von Ceroxid bekannt. Ein erstes Dotierelement M wird gewählt aus der Gruppe, bestehend aus Lu, Yb, Tm, Er, Y, Ho, Dy, Gd, Eu, Sm und Nd. Weitere Dotierelemente A und B sind Alkali- und Erdalkalimetalle. Die hier beschriebenen Ceroxid-Kompositmaterialien haben eine niedrigere elektronische Leitfähigkeit als übliche Ceroxid-Elektrolytmaterialien. Die Herstellung der Festkörperelektrolyte erfolgt mittels Pressen und Sintern, was bei den üblichen hohen Temperaturen erfolgt. Es wird ein Sinterverfahren bei 1500°C während vier Stunden bei atmosphärischen Bedingungen erwähnt, um einen Sinterkörper mit einer kubischen Einphasen-Fluoritstruktur zu erhalten. Über die Mikrostruktur bzw. Korngrösse werden keine Aussagen gemacht, wegen den angegebenen Parametern kann jedoch auch hier eine Korngrösse von mehreren Mikrometern vorausgesetzt werden.

Die Erfinder haben sich die Aufgabe gestellt, ein Verfahren zur Herstellung einer gesinterten Oxidkeramik der eingangs genannten Art zu schaffen, mit welchem das Sinterverhalten von auf CeO₂ basierenden Keramiken so beeinflusst werden kann, dass ein extrem feines Gefüge im submikronen Bereich mit entsprechend guten mechanischen Eigenschaften des Materials erreicht werden kann. Die elektrischen Eigenschaften, also die ionische und elektronische Leitfähigkeit, sollen trotz niedriger Korngrösse unverändert bleiben.

Die Aufgabe wird erfindungsgemäss nach dem Kennzeichen von Patentanspruch 1 gelöst. Spezielle und weiterbildende Ausführungsformen des Verfahrens sind Gegenstand von abhängigen Patentansprüchen.

Das erste Dotierelement M wird zugegeben, um bestimmte elektrochemische Eigenschaften für den vorgesehenen Einsatzbereich zu erhalten, beispielsweise eine vorgegebene Sauerstoffionenleitfähigkeit. Gängige erste Dotierelemente M sind aus der Literatur bekannt, insbesondere Seltene Erden, wie La, Pr, Nd, Pm, Sm, Eu, Gd, Tb, Dy, Ho, Er, Tm, Yb und Lu, die Alkalimetalle Ca, Sr und Ba sowie die Erdalkalimetalle Sc, Y und Ga. Diese Elemente werden einzeln oder in Kombination von mehreren Elementen eingesetzt.

Für das erfindungsgemässe Verfahren kann kommerzielles Ceroxid eingesetzt werden, welches schon einen entsprechenden Molenbruch y des ersten Dotierelements M enthält, was insbesondere für Routineanwendungen vorteilhaft ist. Von wesentlicher Bedeutung ist, dass das Pulver in einer Teilchengrösse im submikronen Bereich vorliegt oder in einen solchen gebracht wird. Dies kann vor oder nach der Zugabe des zweiten Dotierelementes D erfolgen, je nach Korngrösse dieser Komponente.

Selbstverständlich kann zur Durchführung des erfindungsgemässen Verfahrens auch von den einzelnen Komponenten ausgegangen werden. Als Ausgangsmaterialien, auch Edukte genannt, eignen sich insbesondere die Oxide der Komponenten. Diese werden trocken und nass gemahlen, gefolgt von einem Sintern Bei der Verwendung von anorganischen Salzen als Ausgangsstoffe können auch nasschemische Methoden angewendet werden, gefolgt von Cofällung, Filtern und Sintern.

Der Molenbruch x für die Basiskomponente Ce liegt im Bereich von etwa 0,5 bis etwa 1. Das erste Dotierelement M wird in einem Molenbruch y von 0 ≤ y ≤ 0,5 zugegeben. Im Grenzfall kann das erste Dotierelement M auch weggelassen werden. Der Molenbruch z für das zweite Dotierelement D liegt im Bereich von 0 < z ≤ 0,05. Insbesondere liegt der Molenbruch z für das zweite Dotierelement D, welches nicht wie das erste Dotierelement M fakultativ ist, im Bereich von 0,001 ≤ z ≤ 0,02. Verglichen mit dem ersten Dotierelement M ist der Dotierbereich für das zweite Dotierelement D sehr eng und liegt benachbart 0.

In jedem Fall liegt die Teilchengrösse der als Edukte für die Oxidkeramik eingesetzten Komponenten im submikronen Bereich, zweckmässig deutlich unterhalb 1µm. Dies obwohl dem Fachmann bekannt ist, dass ein gewisser Anteil an gröberen Teilchen die Handhabbarkeit des Pulvers erleichtert. Die bevorzugte mittlere Teilchengrösse sämtlicher Komponenten des Ausgangspulvers liegt unterhalb 0,1µm, insbesondere im Bereich von 0,01 bis 0,05 µm.

Die Sintertemperaturen liegen bevorzugt im Bereich von 800 - 1200°C, insbesondere bei 850 - 1100°C. Dabei wird zweckmässig mit einer Heizrate im Bereich von 0,5 - 20, vorzugsweise 1 - 10°C/min., aufgeheizt. Diese Sintertemperaturen liegen deutlich untererhalb des Bereichs des bisher üblichen, ja notwendig erachteten Temperaturbereichs oberhalb 1300°C.

Je nach den erforderlichen Eigenschaften der gesinterten Keramik wird der Sinterprozess nach einer ersten Variante fortgesetzt, bis wenigstens 98% der theoretisch erreichbaren Dichte erreicht wird. Das erfindungsgemässe Sinterverfahren kann jedoch im Rahmen der Wirtschaftlichkeit ohne weiteres fortgeführt werden, bis wenigstens 99% der theoretisch erreichbaren Dichte erreicht oder sogar überschritten werden. Die notwendigen Verfahrensparameter werden rechnerisch oder empirisch ermittelt.

Nach einer anderen Variante des erfindungsgemässen Verfahrens können auch poröse Sinterkeramiken hergestellt werden. Bei einer vorgegebenen Porosität, beispielsweise 80% der theoretisch erreichbaren Dichte, wird die kontinuierliche Temperaturerhöhung bei einer wiederum rechnerisch oder empirisch bestimmten Temperatur abgebrochen und das Sinterverfahren beendet.

Nach allen Varianten wird die Sintertemperatur vorzugsweise nicht unmittelbar nach dem Erreichen der Endtemperatur wieder abgesenkt, beispielsweise durch Abkühlen lassen, sondern während einer bestimmtem Haltezeit bei der vorausbestimmten optimalen Endtemperatur gehalten. Diese Haltezeit liegt vorzugsweise bei wenigstens etwa 0,25 h, insbesondere bei 1 - 2 h.

Die Vorteile des erfindungsgemässen Verfahrens können wie folgt kurz zusammengefasst werden:
- Je nach den Verfahrensparametern kann eine gesinterte Oxidkeramik in dichtem Gefüge ohne offene Porosität mit oberhalb etwa 98%, erforderlichenfalls auch oberhalb etwa 99% der theoretisch erreichbaren Dichte hergestellt werden. Durch früheres Abbrechen des Temperaturanstiegs während des Sinterprozesses kann auch eine poröse Struktur mit einer vorgegebenen niedrigeren Dichte erreicht werden.
- Die gesinterte Oxidkeramik hat ein extrem feines Gefüge mit einer Korngrösse von höchstens etwa 0,5 µm, vorzugsweise höchstens etwa 0,1 µm, wodurch ein Werkstoff mit besseren mechanischen Eigenschaften hergestellt werden kann.
- Durch die niedrigeren Sintertemperaturen wird das Sinterverfahren bezüglich des Energie- und Investitionsaufwands geringer.
- Die elektrischen Eigenschaften bezüglich der ionischen und elektronischen Leitfähigkeit bleiben unverändert gut.
- Entsprechend vielfältig sind die Verwendungsmöglichkeiten der erfindungsgemäss hergestellten Keramiken, beispielsweise als Elektrolyte, Elektroden, Sensoren und Isolationsmaterial.

Die Erfindung wird anhand der in der Zeichnung dargestellten Bilder und Messkurven näher erläutert. Es zeigen schematisch:
- Fig. 1 eine Sinterrate ΔL/L₀ als Funktion der Temperatur T für Ce_{0.8}Gd_{0.2}Co_{z}O₂₋ₐ,
- Fig. 2 eine Sinterrate ΔL/L₀ als Funktion der Temperatur T für Ce_{0.8}Gd_{0.2}Cu_{z}O₂₋ₐ,
- Fig. 3 eine Mikrostruktur von Ce_{0.8}Gd_{0.2}O₂₋ₐ, gemäss dem Stand der Technik,
- Fig. 4 eine Mikrostruktur von Ce_{0.8}Gd_{0.2}Co₁O₂₋ₐ, gemäss Fig. 1,
- Fig. 5 die elektrische Leitfähigkeit von Ce_{0.8}Gd_{0.2}D₁O₂₋ₐ,
- Fig. 6 die elektrische Gesamtleitfähigkeit von Ceroxid-Keramiken in Funktion des Sauerstoffpartialdrucks,
- Fig. 7 eine Dichteänderung von Ceroxidkeramiken bei konstanter Heizrate, und
- Fig. 8 eine Variante von Fig. 7.

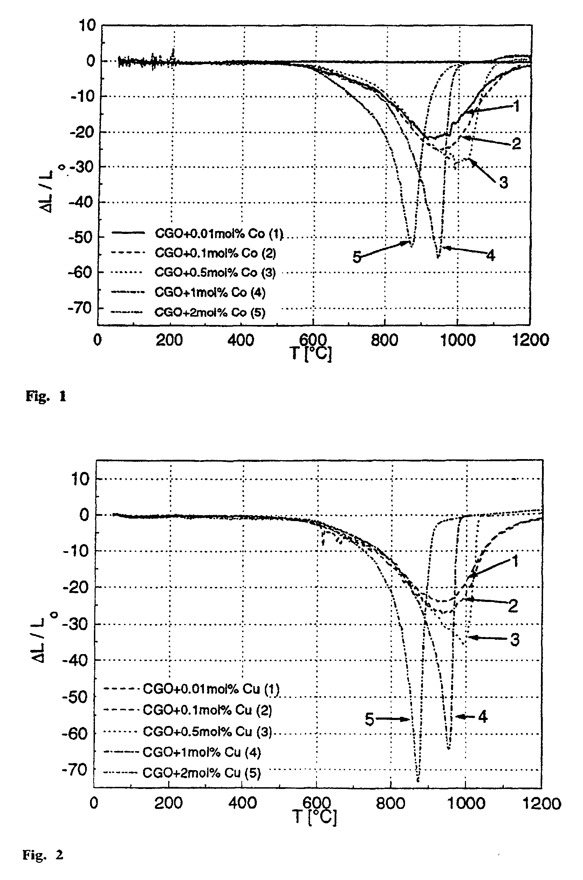

In Fig. 1 und 2 wird eine Sinterrate ΔL/L₀ für Ce_{0.8}Gd_{0.2}O₂₋ₐ, im folgenden mit CGO bezeichnet, mit in variabler Menge zugegebenem zweitem Dotierelement D dargestellt. Das Sintern erfolgt mit konstanter Heizrate. Gemäss Fig. 1 wird als zweites Dotiermaterial Kobalt Co, gemäss Fig. 2 Kupfer Cu zugegeben. Die Dotiermenge wird in mol% angegeben, wobei 0,01mol% einem Molenbruch z von 0,0001, 2mol% einem Molenbruch z von 0,02 entsprechen.

Tendenzmässig verlaufen die Kurven 1 bis 5 mit beiden zweiten Dotierelementen Co (Fig. 1) und Cu (Fig. 2) gleich.

Kurve 1, welche die Sinterrate von CGO mit 0,01mol% D darstellt, weist eine sich über einen breiten Temperaturbereich entsprechende Sinterrate mit einem geringen Maximum im Bereich von etwa 930°C liegenden Scheitel auf. Die maximale Sinterrate liegt, bei einer Heizrate von 5°C/min. und einer Gründichte von etwa 62%, lediglich wenig über -20 ΔL/L₀. Die Kurven 2 und 3, welche die temperaturabhängige Sinterrate von CGO mit 0,1 beziehungsweise 0,5mol% D zeigen, entsprechen im wesentlichen Kurve 1, zeigen jedoch eine etwas grössere Sinterrate ΔL/L₀, mit einem zu höherer Temperatur hin verschobenen Scheitel von bis zu 1000°C. Im Fall von Co als zweitem Dotierelement D (Fig. 1) liegt der Scheitel von Kurve 2 im Bereich von -25, bei Kurve 3 von etwa -30. Falls D = Cu (Fig. 2) liegt der Scheitel von Kurve 2 unterhalb von -25, bei Kurve 3 etwa von -30 und ist zu deutlich höheren Temperaturen verschoben, nämlich zu 950 (Kurve 2) und 1000°C (Kurve 3).

Die Kurven 4 und 5 für die temperaturabhängige Sinterrate mit 1mol% D und 2mol% D zeigen gegenüber den Kurven 1 bis 3 einen signifikant unterschiedlichen Verlauf. Sie erstrecken sich über einen weit geringeren Temperaturbereich und erreichen für ΔL/L₀ Werte im Bereich von -50 bis -75 und ihr Scheitel, d.h. die maximale Sinterrate, liegt bei deutlich tieferen Temperaturen, bei 930 (Kurve 4) und 850 - 870°C (Kurve 5).

Fig. 1 und 2 belegen, dass mit der Zugabe einer geringen Menge von Co oder Cu eine deutliche Absenkung der Sintertemperatur mit einem markanten Maximum für die Sinterrate im Bereich von 850 - 1000, insbesondere bei etwa 900°C, erreicht werden kann.

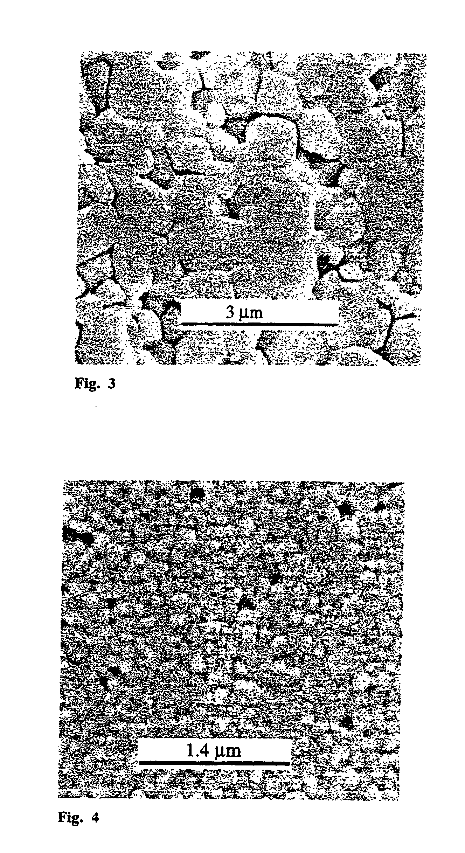

Fig. 3 zeigt eine gröbkörnige Mikrostruktur von CGO ohne Zugabe eines zweiten Dotierelementes D, gesintert bei etwa 1450°C, mit einer Haltezeit 2 h. Die Korngrössen liegen im Bereich von 1 µm, zum Teil auch wesentlich darüber, teilweise auch deutlich darunter, es ergibt sich so eine breite Korngrössenverteilung im Bereich von 0,4 - 3 µm und eine relative Dichte von etwa 90%. Dieses breiter Variationsspektrum für die Korngrösse beeinträchtigt die mechanische Stabilität. Fig. 3 dokumentiert den üblichen Stand der Technik.

Fig. 4 zeigt eine erfindungsgemässe Mikrostruktur von CGO, dotiert mit 1mol% Co, gesintert bei 900°C mit einer Haltezeit von 2 h. Die Korngrösse liegt bei etwa 0,1 µm, die Dichte bei mehr als 98% der theoretisch möglichen Dichte. Dies führt zu einer ausserordentlich hohen mechanischen Stabilität.

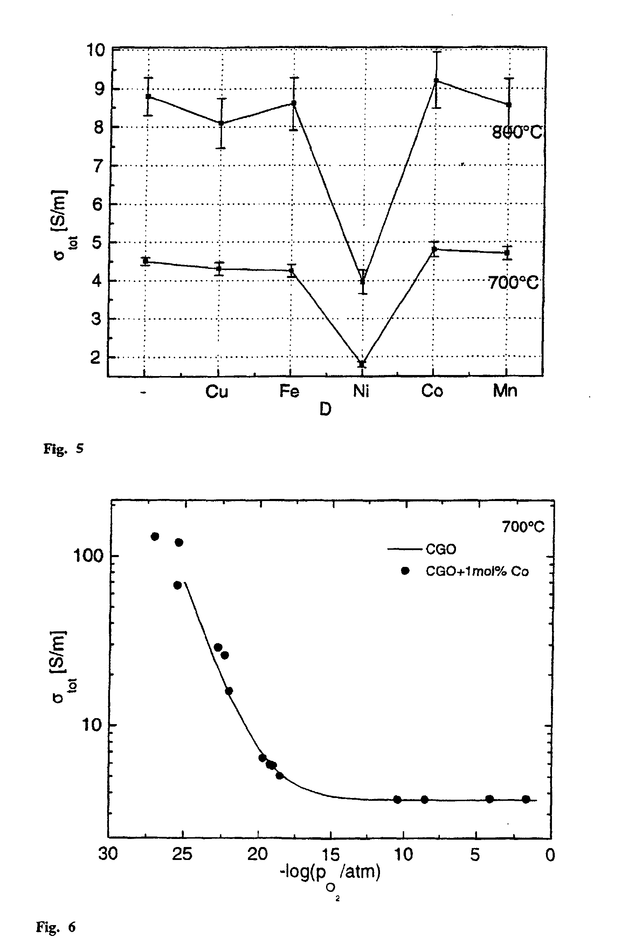

In Fig. 5 ist die gesamte elektrische Leitfähigkeit σₜₒₜ[S/m], d.h. die Summe der ionischen und elektronischen Leitfähigkeit, bei 700 und 800°C aufgetragen. Auf der Abszisse ganz links liegen die vergleichsweisen Werte für reines CGO, dann suksessive diejenigen von Cu, Fe, Ni, Co und Mn, wobei die Konzentration des zweiten Dotierelements D jeweils 1mol% beträgt. Die elektrische Leitfähigkeit liegt, mit Ausnahme der Oxidkeramik mit dem zweiten Dotierelement Nickel, stets im selben Grössenbereich. Die Leitfähigkeit steigt durchwegs mit steigender Temperatur. Die dotierten Ceroxid-Keramiken sind jeweils bei 900°C gesintert worden, das reine CGO bei 1450°C.

Fig. 6 zeigt die Abhängigkeit der elektrischen Gesamtleitfähigkeit σₜₒₜ[S/min] in Abhängigkeit vom Sauerstoffpartialdruck bei einer Temperatur von 700°C. Auf der Abszisse ist - log(p_{O2}/atm) aufgetragen, auf der Ordinate die elektrische Gesamtleitfähigkeit in logarithmischem Massstab. Die Kurve für bei etwa 1450°C gesintertem reinem CGO und bei 900°C mit 1mol% Co gesintertem CGO verlaufen praktisch identisch.

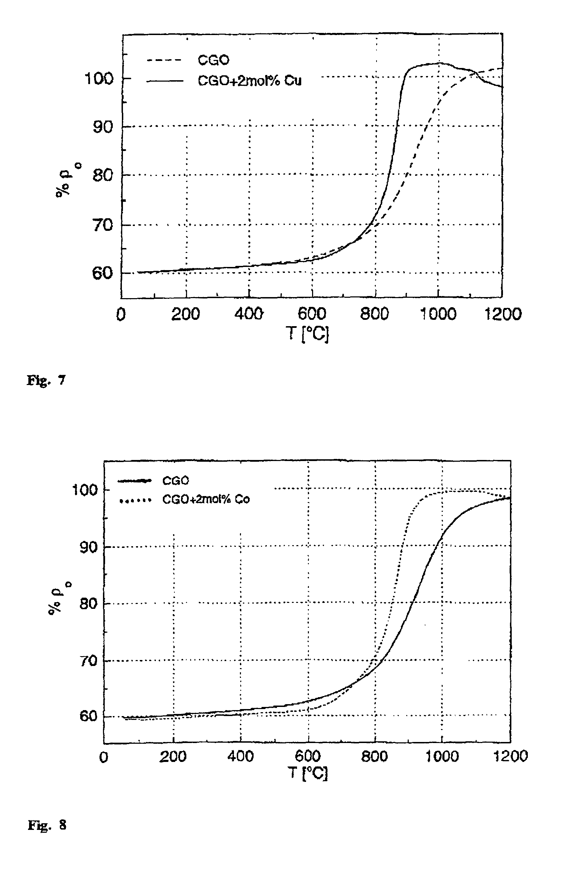

In den Fig. 7 und 8 wird eine Dichteänderung bei einer konstanten Heizrate von etwa 10°C/min. für reines CGO als Vergleichsbeispiel und mit 2mol% Cu (Fig. 7) oder Co (Fig. 8) als Komponente D dotiertem CGO gezeigt. Auf der Abszisse ist die Temperatur T[°C], auf der Ordinate die Dichte in %po mit 100% für die theoretisch mögliche Dichte aufgetragen. Fig. 7 und 8 zeigen einen wesentlich rascheren Anstieg der Dichteänderungskurve für das mit der Komponente D dotierte CGO ab etwa 750°C. Bei der Zugabe von 2mol% Cu ist die theoretisch mögliche Dichte von 100% bei knapp 900°C praktisch erreicht, bei der Dotierung mit 2mol% Co etwa bei 950°C. In beiden Fällen ist jedoch die markant niedrigere Sintertemperatur von mit einem zweiten Dotierelement D (Cu, Co) dotierten CGO unverkennbar.

### Beispiel 1

Nach dem erfindungsgemässen Verfahren werden Proben auf der Basis von CeO₂ hergestellt. Anhand einer ersten Probe wird die Dotierung von CGO mit 1mol% Kupfer (zweites Dotierungselement D) im Detail beschrieben. Für die Proben 2 -5 mit einem anderen zweiten Dotierelement D ist das Vorgehen entsprechend.

2.778 g Cu(NO₃)₂*3H₂O, Kupfernitrat, werden in 50 ml Ethanol vollständig aufgelöst. 5 ml der Lösung werden anschliessend zu 20 g Ce_{0.8}Gd_{0.2}O₂₋ₐ (CGO), welches in submikroner Pulverform vorliegt, gegeben, in einem Achatmörser sorgfältig gemischt und bei 120°C getrocknet.

Das zweite Dotierelement D wird jeweils in einer Konzentration von 2mol% zugegeben. Der Verlauf der Sinterrate ΔL/L in Funktion der Temperatur T ist für die zweiten Dotierelemente Co und Cu als Kurve 5 von Fig. 1 und 2 aufgetragen.

Folgende weitere Proben werden entsprechend hergestellt:
- Probe 2: Ce_{0.8}Gd_{0.2}O₂₋ₐ + 1mol% Co, 3.346g Co(NO₃)₂*6H₂O auf 50 ml Ethanol,
- Probe 3: Ce_{0.8}Gd_{0.2}O₂₋ₐ + 1mol% Ni, 3.344g Ni(NO₃)₂*6H₂O auf 50 ml Ethanol
- Probe 4: Ce_{0.8}Gd_{0.2}O₂₋ₐ + 1mol% Fe, 4.645g Fe(NO₃)₃*9H₂O auf 50 ml Ethanol
- Probe 5: Ce_{0.8}Gd_{0.2}O₂₋ₐ + 1mol% Mn, 2.886g Mn(NO₃)₃*4H₂O auf 50 ml Ethanol

Jeweils 2 g des Pulvers werden in zwei Stufen zu Tabletten von 5 mm Dicke und etwa 10 mm Durchmesser gepresst. Dieses uniaxiale Pressen erfolgt mit 50 MPa, des anschliessende isostatische Pressen mit 300 MPa. In einem Dilatometer werden die Proben mit einer Heizrate von 10°C/min. auf 1200°C aufgeheizt und die Längenänderung ΔL protokolliert.

In der nachfolgenden Tabelle sind die Sintertemperaturen und die dabei erreichte Dichte angegeben. Die Keramik ohne zweites Dotierelement D dient als Vergleichsbeispiel, welches nicht in den Bereich der vorliegenden Erfindung fällt.

| Zweites Dotierelement D | Sintertemperatur [°C] | Dichte [in % der theor. Dichte] |
|---|---|---|
| - | 1450 | 90 |
| Cu | 900 | >99 |
| Co | 1000 | >99 |
| Fe | 1100 | >98 |
| Mn | 1100 | >98 |
| Ni | 1000 | >98 |

### Beispiel 2

Das CGO-Pulver wird wie unter Beispiel 1 mit den zweiten Dotierelementen D versetzt. Anschliessend erfolgt das uniaxiale Pressen mit einem Pressdruck von 40 MPa (90 kN) während 3 min. zu einer Scheibe mit 60 mm Durchmesser und etwa 2 mm Dicke. Das Sintern erfolgt in Luft auf einer MgO Unterlage bei den in der vorstehenden Tabelle angegebenen Werten und einer Haltezeit von 2 h. Anschliessend werden die Scheiben auf eine Dicke von 200 µm geschliffen und poliert. Auf beiden Seiten der Scheiben werden dann Silberelektroden aufgebracht. Als Stromsammler werden Platinnetze und für den Anschluss an ein Messgerät Platindrähte verwendet. Die elektrische Gesamtleitfähigkeit der einzelnen Proben wird mit Impedanz-Spektroskopie in Luft, bei Temperaturen von 700 und 800°C, ermittelt. Die Resultate sind in Fig. 5 aufgetragen.

### Beispiel 3

Die elektrische Gesamtleitfähigkeit von wie unter Beispiel 2 hergestellten Proben wird mit Impedanz-Spektroskopie als Funktion des Sauerstoffpartialdruckes ermittelt. Die Resultate sind in Fig. 6 aufgetragen.

### Beispiel 4

Das CGO-Pulver wird wie in Beispiel 1 mit 1mol% Co als zweitem Dotierelement D versetzt. 2 g dieses Pulvers werden in zwei Stufen zu Tabletten von etwa 5 mm Dicke und 10 mm Durchmesser gepresst, vorerst durch uniaxiales Pressen mit 50 MPa und anschliessen durch isostatisches Pressen mit 300 MPa. Anschliessend wird die Probe bei 900°C gesintert und poliert. Die Mikrostruktur ist in Fig. 4 dargestellt. Der Unterschied zu Fig. 3, einer bei 1450°C gesinterten Vergleichsprobe aus reinem CGO, ist ausserordentlich deutlich.

## Patentansprüche

1. Verfahren zur Herstellung einer gesinterten Oxidkeramik der Zusammensetzung CeₓM_{y}D_{z}O₂₋ₐ mit dichtem Gefüge ohne offene Porosität oder mit einer vorausbestimmten Porosität, wobei ein erstes Dotierelement M aus wenigstens einem Element der Gruppe, bestehend aus den Seltenen Erden, jedoch M ≠ Ce, Alkalimetallen, Erdalkalimetallen und Gallium, und ein zweites Dotierelement D aus wenigstens einem Metall, jedoch D ≠ M, eingesetzt wird, wobei sich der Wert für a aus den übrigen Parametern der Oxidkeramik ergibt,
**dadurch gekennzeichnet, dass**
die Komponenten mit Molenbrüchen im Bereich von 0,5 ≤ x ≤ 1 für Ce, 0 ≤ y ≤ 0,5 für M und 0 < z ≤ 0,05 für D, die zweiten Dotierelemente D aus wenigstens einem Metall der Gruppe, bestehend aus Cu, Co, Fe, Ni und Mn, in submikroner Teilchengrösse oder als Salzlösung eingesetzt und bei einer Temperatur im Bereich von 750 - 1250°C zu einer Oxidkeramik mit extrem feinem Gefüge einer Korngrösse von höchstens etwa 0,5 µm gesintert werden.

2. Verfahren nach Anspruch 1, **dadurch gekennzeichnet, dass** in der Gruppe des ersten Dotiermaterials M = La, Pr, Nd, Pm, Sm, Eu, Gd, Tb, Dy, Ho, Er, Tm, Yb, Lu; Ca, Sr, Ba; Sc, Y eingesetzt werden.

3. Verfahren nach Anspruch 1 oder 2, **dadurch gekennzeichnet, dass** das zweite Dotierelement mit einem Molenbruch D im Bereich von 0,001 ≤ z ≤ 0,02 eingesetzt wird.

4. Verfahren nach einem der Ansprüche 1 bis 3, **dadurch gekennzeichnet, dass** Edukte mit einer mittleren Korngrösse im Bereich von höchstens 0,1 µm, vorzugsweise 0,01 - 0,05 µm, eingesetzt werden.

5. Verfahren nach einem der Ansprüche 1 bis 4, **dadurch gekennzeichnet, dass** das Sintern beim Erreichen einer vorgegebenen Temperatur abgebrochen wird.

6. Verfahren nach einem der Ansprüche 1 bis 5, **dadurch gekennzeichnet, dass** bei einer Temperatur im Bereich von 800 - 1200°C, insbesondere bei 850 - 1100°C, gesintert wird.

7. Verfahren nach einem der Ansprüche 1 bis 6, **dadurch gekennzeichnet, dass** mit einer Heizrate im Bereich von 0,5 - 20, vorzugsweise 1 - 10°C/min., gesintert wird.

8. Verfahren nach einem der Ansprüche 1 bis 7, **dadurch gekennzeichnet, dass** bis zum Erreichen einer Dichte von wenigstens etwa 98% der theoretisch erreichbaren Dichte, vorzugsweise von wenigstens etwa 99%, gesintert wird.

9. Verfahren nach einem der Ansprüche 1 bis 8, **dadurch gekennzeichnet, dass** die Edukte mit einer Haltezeit von wenigstens etwa 0,25 h, vorzugsweise etwa 1 - 2 h, bei der optimalen Endtemperatur gesintert werden.

10. Verfahren nach einem der Ansprüche 1 bis 9, **dadurch gekennzeichnet, dass** die Edukte in Form von Oxiden trocken und/oder nass gemahlen und gesintert werden.

11. Verfahren nach einem der Ansprüche 1 bis 9, **dadurch gekennzeichnet, dass** die Edukte als anorganische Salze gemeinsam ausgefällt, gefiltert und gesintert werden.

## Claims

1. Process for production of a sintered oxide ceramic of composition CeₓM_{y}D_{z}O₂₋ₐ with dense structure without open porosity or with a predetermined porosity, where a first doping element M is used of at least one element of the group consisting of the rare earths but M ≠ Ce, alkali metals, alkaline earth metals and gallium, and a second doping element D of at least one metal but D ≠ M, where the value for a arises from the above parameters for the oxide ceramic,
**characterised in that**
the components are used with mol fractions in the range from 0.5 ≤ x ≤ 1 for Ce, 0 ≤ y ≤ 0.5 for M and 0 < z ≤ 0.05 for D, the second doping element D consisting of at least one metal of the group consisting of Cu, Co, Fe, Ni and Mn, in the submicron particle size or as a salt solution, and are sintered at a temperature in the range of 750 - 1250 °C into an oxide ceramic with extremely fine structure with a grain size of maximum approximately 0.5 µm.

2. Process according to claim 1, **characterised in that** first doping material M is taken from the group La, Pr, Nd, Pm, Sm, Eu, Gd, Tb, Dy, Ho, Er, Tm, Yb, Lu; Ca, Sr, Ba; Sc, Y.

3. Process according to claim 1 or 2, **characterised in that** the mol fraction for the second doping element D is in the range from 0.001 ≤ z ≤ 0.02.

4. Process according to any of claims 1 to 3, **characterised in that** educts are used with a mean grain size in the range of maximum 0.1 µm, preferably 0.01 - 0.05 µm.

5. Process according to any of claims 1 to 4, **characterised in that** the sintering is interrupted when a preset temperature is reached.

6. Process according to any of claims 1 to 5, **characterised in that** sintering takes place at a temperature in the range of 800 - 1200°C, in particular 850 to 1100°C.

7. Process according to any of claims 1 to 6, **characterised in that** sintering takes place with a heating rate in the range of 0.5 - 20, preferably 1 - 10°C/min.

8. Process according to any of claims 1 to 7, **characterised in that** sintering continues until a density of at least around 98% of the theoretically possible density, preferably at least around 99%, is reached.

9. Process according to any of claims 1 to 8, **characterised in that** the educts are sintered with a holding time of at least approximately 0.25 h, preferably around 1 - 2 h, at the optimum end temperature.

10. Process according to any of claims 1 to 9, **characterised in that** the educts in the form of oxides are ground dry and/or wet and sintered.

11. Process according to any of claims 1 to 9, **characterised in that** the educts are precipitated, filtered and sintered jointly as inorganic salts.

## Revendications

1. Procédé pour la fabrication d'un oxyde céramique fritté de composition CeₓM_{y}D_{z}O₂₋ₐ, qui présente une structure compacte sans porosité ouverte ou avec une porosité prédéterminée, dans lequel on implante un premier élément dopant, M, constitué par au moins un élément du groupe formé par les terres rares, à l'exception de M = Ce, les métaux alcalins, les métaux alcalino-terreux et le gallium, et un deuxième élément dopant, D, constitué par au moins un métal, D étant différent de M, et dans lequel la valeur de a résulte des autres paramètres de la composition,
**caractérisé en ce que**, les constituants présentant des fractions molaires de x comprises entre 0,5 et 1 pour Ce, de y comprises entre 0 et 0,5 pour M et de z compris entre 0 et 0,05 pour D (0 non compris), on implante les deuxièmes éléments de dopage D constitués par au moins un métal du groupe formé par Cu, Co, Fe, Ni et Mn, en dimension granulométrique submicronique ou sous forme de solution saline, et on réalise le frittage à une température comprise entre 750 et 1 250 °C en un oxyde céramique présentant une structure extrêmement fine, dont la granulométrie est d'au plus quelque 0,5 µm.

2. Procédé selon la revendication 1, **caractérisé en ce que** dans le groupe de la première matière de dopage, on implante M = La, Pr, Nd, Pm, Sm, Eu, Gd, Tb, Dy, Ho, Er, Tm, Yb, Lu ; Ca, Sr, Ba ; Sc, Y.

3. Procédé selon la revendication 1 ou 2, **caractérisé en ce que** l'on implante le deuxième élément dopant à une fraction molaire pour D de z compris entre 0,001 et 0,02.

4. Procédé selon l'une quelconque des revendications 1 à 3, **caractérisé en ce que** l'on implante des éduits ayant une granulométrie moyenne au plus égale à 0,1 µm, de préférence comprise entre 0,01 et 0,05 µm.

5. Procédé selon l'une quelconque des revendications 1 à 4, **caractérisé en ce que** l'on interrompt le frittage lorsque l'on a atteint une température prédéterminée.

6. Procédé selon l'une quelconque des revendications 1 à 5, **caractérisé en ce que** l'on réalise le frittage à une température comprise entre 800 et 1 200 °C, en particulier de 850 à 1 100 °C.

7. Procédé selon l'une quelconque des revendications 1 à 6, **caractérisé en ce que** l'on réalise le frittage à une vitesse de chauffage de 0,5 à 20, de préférence de 1 à 10 °C/mn.

8. Procédé selon l'une quelconque des revendications 1 à 7, **caractérisé en ce que** l'on réalise le frittage jusqu'à ce que l'on ait obtenu une densité au moins égale à 98 % , et de préférence à 99 % de la densité que l'on peut théoriquement obtenir.

9. Procédé selon l'une quelconque des revendications 1 à 8, **caractérisé en ce que** l'on fritte les éduits avec un temps de maintien d'au moins environ 0,25 h, qui est, de préférence, compris entre 1 et 2 h, à la température finale optimale.

10. Procédé selon l'une quelconque des revendications 1 à 9, **caractérisé en ce que** les éduits sont broyés à sec ou par voie humide sous la forme d'oxydes et sont frittés.

11. Procédé selon l'une quelconque des revendications 1 à 9, **caractérisé en ce que** les éduits sont précipités ensemble sous la forme de sels minéraux, filtrés et frittés.
